# EUROPEAN PATENT SPECIFICATION

(11) **EP 2 209 872 B1**
(45) Date of publication and mention of the grant of the patent: **05.12.2018**
(21) Application number: 08837289.1
(22) Date of filing: 10.10.2008
(51) Int. Cl.: C10B 49/22, C10B 53/02, C10B 49/10

(54) **APPARATUS FOR PRODUCING A PYROLYSIS PRODUCT**
VORRICHTUNG ZUR HERSTELLUNG EINES PYROLYSEPRODUKTS
APPAREIL DE PRODUCTION D'UN PRODUIT DE PYROLYSE

(30) Priority: 11.10.2007 FI 20075720
(43) Date of publication of application: 28.07.2010
(73) Proprietor: Teknologian tutkimuskeskus VTT Oy, 02150 Espoo (FI)
(72) Inventor: SIPILÄ, Kai, Espoo 02200 (FI); SOLANTAUSTA, Yrjö, FI-00410 Helsinki (FI); JOKELA, Pekka, FI-02660 Espoo (FI); RAIKO, Markku, FI-05800 Hyvinkää (FI)
(74) Representative: Papula Oy
(86) International application number: PCT/FI2008/050567
(87) International publication number: WO 2009/047392

(56) References cited:
- WO-A1-02/083816
- WO-A2-92/04423
- FI-B1- 116 902
- FI-B1- 117 512
- US-A- 6 133 499
- OASMAA A ET AL: "Fast pyrolysis of forestry residue. 1. Effect of extractives on phase separation of pyrolysis liquids" ENERGY AND FUELS, vol. 17, no. 1, January 2003 (2003-01), pages 1-12, XP002513659 AMERICAN CHEMICAL SOCIETY US

## Description

### FIELD OF THE INVENTION

The invention relates to an apparatus defined in the preamble of claim 1 for producing a pyrolysis product, the apparatus comprising a pyrolysis reactor for forming pyrolysis product fractions from raw material by fast pyrolysis, a condensing device for condensing gaseous pyrolysis product fractions to mainly liquid pyrolysis product fractions, a combustion boiler for forming energy fractions, the pyrolysis reactor being arranged in conjunction with the combustion boiler, and feeding devices for feeding the raw materials to the pyrolysis reactor and the combustion boiler. Further, the invention relates to a use of the apparatus.

### BACKGROUND OF THE INVENTION

It is known from the prior art that a pyrolysis product, i.e. pyrolysis liquid or pyrolysis gas, is produced from different kinds of biomasses or organic materials such as wood, bark, paper, straw, waste plastic, oil shale, lignite, peat or the like by dry distillation with the pyrolysis technique. The pyrolysis is typically performed in oxygen-free conditions at a temperature of about 300 to 800°C. When slow heating rate is applied, the pyrolysis liquid, e.g. wood tar from dry wood, can typically be recovered in an amount of about 20 to 30 % by weight. The amount of the pyrolysis liquid increases when the fast pyrolysis method is applied. There are many known fast pyrolysis methods for producing pyrolysis products and chemicals.

Fast pyrolysis is typically carried out by heating the fuel to be pyrolyzed in a hot oxygen-free gas flow by introducing the required heat to the pyrolyzer by means of a heating gas, heat exchanger or heat transfer agent, e.g. sand or aluminum oxide based carrier. A bubbling or sand circulating fluidized-bed reactor may be used as the pyrolyzer. The produced pyrolysis vapor is condensed to a temperature of less than 150°C in order to form the pyrolysis liquid.

The fuel to be pyrolyzed, e.g. biomass, may be conducted to a dryer before the pyrolyzer for drying in order to reduce the water content of the pyrolysis liquid that is being formed. Normally used are the known drum, flash or fluidized-bed dryers which typically comprise combustion gas or water vapor as the drying gas. It is also known to use a steam dryer in which the heat is introduced by means of hot sand to the dryer operating on the fluidized-bed basis and in which only water is removed. The temperature is kept at such level that organic compounds do not escape.

EP publication 513051 (Ensyn Technologies Inc.) describes a method and apparatus for producing a pyrolysis liquid from fuels by fast pyrolysis in such manner that the circulating mass reactor which operates as the pyrolyzer comprises separate mixing and reactor zones. The heat transfer to the fuel particles is effected by using heat transporting sand or an alumina-silica catalyst having the average particle size of from 40 to 500µm as the heat transfer agent. The method uses an oxygen-free carrier gas. The feeding material in particle form, oxygen-free carrier gas and hot heat-transporting particle material are mixed together in the base section of the reactor, and the mixture is transported upwards to a reactor section in which the feeding material is converted to products. The contact time between the feed material and the heat transporting material is less than 1.0 seconds. The heat transporting particle material is separated from the product fractions and recirculated to the reactor. In the method, the mass ratio of the heat transfer material to the fuel is greater than 5:1.

Also known from prior art is the use of an oxidizing reactor for processing sand that exits the pyrolyzer and coke produced during the pyrolysis. In the oxidizing reactor, coke is burned and sand is heated and recirculated to the pyrolyzer. The ratio of the oxidizing reactor power to the pyrolyzer fuel power is typically about 1:5. This type of oxidizing reactor is designed to primarily burn only the coke produced during the pyrolysis and the non-condensible gases. Therefore, the heat content of the coke and non-condensible gases is, by the energy balance, a limiting factor in the mass feed to the pyrolyzer.

A problem with the known pyrolysis processes is the need for additional fuel in the pyrolyzer and in the additional equipment, such as the dryer, and drifting of the water that has been vaporized in the process to the pyrolysis oil. Normally, the water vaporized for example in the dryer is condensed or conducted to outside air. When the vaporized water contains organic dry distillation products, application of the process becomes problematic due to environmental nuisances, e.g. strong odors. Further, the known devices do not permit utilization of different process flows, side flows and unwanted intermediate/end products in the process in an efficient manner.

Furthermore, it is previously known from patent FI 117512 by the same applicant to integrate the pyrolyzer and the combustion boiler to one assembly. Also, from FI 116902 and Oasmaa A et al. "Fast pyrolysis of forestry residue. 1. Effect of extractives on phase sepration of pyrolysis liquids", Energy an fuels, vol. 17, no. 1, January 2003 (2003-01), pages 1 - 12, XP002513659, American Chemical Society US, is known similar pyrolysis processes.

Furthermore, from WO 92/04423 and WO 02/083816 is known a pyrolysis process for pyrolyzing material.

### OBJECTIVE OF THE INVENTION

The objective of the invention is to eliminate the above-mentioned problems and to disclose a novel apparatus for use in the production of a pyrolysis product.

### SUMMARY OF THE INVENTION

The apparatus according to the invention is characterized by what has been presented in the claims.

The invention is based on an apparatus for producing a pyrolysis product in a flexible manner. The apparatus comprises a pyrolysis reactor for forming pyrolysis product fractions from a raw material by fast pyrolysis, a separating device for separating a fraction from pyrolysis product fractions after the pyrolysis, a condensing device for condensing gaseous pyrolysis product fractions to mainly liquid pyrolysis product fractions, a combustion boiler for forming energy fractions in the form of heat, electricity, steam or gas, the pyrolysis reactor being arranged in conjunction with the combustion boiler, heat transfer material that is heated in the combustion boiler and used for transferring the energy fractions, means for circulating the heat transfer material from the combustion boiler to the pyrolysis reactor, feeding devices for feeding the raw materials to the pyrolysis reactor and the combustion boiler, means for feeding carrier gas to the pyrolysis reactor, and means for circulating residual flow to the combustion boiler. According to the invention, the apparatus comprises at least one separating device arranged substantially in conjunction with the pyrolysis reactor for separating other product fractions, such as solid and/or liquid fractions and comprising also heat transfer material, from the gaseous pyrolysis product fractions after the pyrolysis and means for conducting at least part, preferably most, of the other fractions than the gaseous pyrolysis product fractions from the separator to the combustion boiler and means for circulating side flow, residual flow and/or waste flow to the combustion boiler, the flows being selected from the following: non-condensible gases from the condensing device, the combustion gas fraction, the refuse flow from the feed of the pyrolysis reactor and solids from the condensing device and means for arranging the raw material of the pyrolysis reactor and the carrier gas to a mixture and means for conducting the heated heat transfer material to the mixture of the raw material of the pyrolysis reactor and the carrier gas, and means for forming the carrier gas from the combustion gas of the combustion boiler and circulating it to the pyrolysis reactor.

In this context, the gaseous pyrolysis product fractions may refer to mixtures of gas, steam and/or aerosol.

In one embodiment, the separating device is a cyclone, distiller, decanter, clearing basin, flotation device, centrifuge, other extractor or the like. In one embodiment, an integrated solution is used as the separating device, in which a combination of the conventional cyclone, impact separator and settling chamber is used for separating the coarse material and a full-feed cyclone, e.g. Cymic, Leka or the like, positioned in the inner tube of the cyclone, is used for separating the fine matter. In one embodiment, a two-phase separating device in which the separating cyclones are arranged within each other can be used as the separating device. Any known separating device suitable for the purpose may be used as the separating device.

In one embodiment, the apparatus comprises means for feeding the solids containing flow or a subfraction of that flow, i.e. other than the gaseous fraction flow, that is fed from the separating device to the combustion boiler, to the pyrolysis reactor, e.g. to its feeding device, after the separating device.

Preferably, the pyrolysis reactor, condensing device and separating device are substantially integrated with the combustion boiler, i.e. an unified assembly is formed, fuel is fed to the combustion boiler and burned in order to produce heat energy, and pyrolysis steam is formed from biomass and/or equal organic material containing volatile materials in the pyrolysis reactor and condensed to pyrolysis liquid in the condenser, and the heat energy or steam that has been formed in the combustion boiler is recovered or the heat is circulated to the other parts of the apparatus, such as to the pyrolysis reactor, e.g. in the form of a hot heat transfer agent. According to the invention, optimum fuel mixtures are fed to the combustion boiler and the pyrolysis reactor in order to improve the efficiency of the combustion and pyrolysis and the yield of the pyrolysis product, and only part of the heat energy that has been formed in the combustion boiler is conducted to the pyrolysis reactor.

In one embodiment, the quality of the liquid pyrolysis product is monitored by suitable means. Preferably, the condition that the quality properties of the pyrolysis product meet the determined criteria is ensured at specific and predetermined intervals, e.g. continuously. In one embodiment of the invention, the apparatus comprises, in conjunction with the condensing device, means for monitoring, preferably in an on-line manner, the water content of the liquid pyrolysis product that has been condensed by the condensing device. In one embodiment, the water content of the liquid pyrolysis product is kept below 25%. For example, if the water content of the liquid pyrolysis product increases, the temperature of the condensing device may be raised by the adjusting means.

In one embodiment of the invention, the apparatus comprises means for conducting non-condensible gas fractions from the condensing device to the combustion boiler. In one embodiment, the non-condensible gas fractions are conducted from the condensing device to the pipe fitting between the separating device and the combustion boiler. In one alternative embodiment, the non-condensible gas fractions are conducted from the condensing device directly to the combustion boiler. Preferably, the non-condensible gases, e.g. odorous gases, chemical compounds and/or aqueous solution thereof, e.g. from the separator, condenser and/or dryer, are circulated to the combustion boiler to be burned. Alternatively, the non-condensible gases or the like may be conducted to chemical recovery. By blowing, i.e. conducting, the non-condensible gases to the combustion boiler, it is possible to control e.g. the aerosols which may easily cause problems in the process.

In one embodiment of the invention, the apparatus comprises means for feeding carrier gas to the pyrolysis reactor. In one embodiment, the apparatus comprises means for forming the carrier gas from the combustion gas of the combustion boiler and circulating it to the pyrolysis reactor. Preferably, water is removed from the combustion gas. The combustion gas may be purified by methods and devices known per se, e.g. electrie filter, by means of different types of washers or the like.

In one embodiment, the carrier gas contains oxygen in an amount of 1 to 7% by volume. In a preferred embodiment, the pyrolysis is performed in the pyrolysis reactor in the presence of oxygen.

In one embodiment, combustion gas, air, water vapor or mixtures thereof are used as the carrier gas.

In a preferred embodiment, the carrier gas is conducted through the pyrolysis reactor without recirculating it to the pyrolysis.

In one embodiment of the invention, the apparatus comprises means for feeding oxygen, preferably to the carrier gas, for the pyrolysis. In one embodiment, additional oxygen can be fed to the carrier gas e.g. in the form of air. By increasing the proportion of air, the proportion of the liquefiable components in the pyrolysis product can be altered with respect to the proportion of the non-condensible fractions, according to the desired product distribution. The integrated combination of the combustion boiler and the pyrolysis reactor can thus be used as a gasifier-type apparatus.

The stability of the pyrolysis product liquid can be improved by the oxygen included in the carrier gas. When the carrier gas contains e.g. 2 to 4% by volume of oxygen, the more reactive compounds react already before the condensation and the increase of viscosity of the product liquid as a function of time can be reduced. In this manner, the preservability of the pyrolysis product liquid can be improved, the storage period can preferably be extended and the competitiveness of the product improved.

In one embodiment, the carrier gas may also be used as a circulating gas in the combustion boiler.

In one embodiment, the apparatus comprises means for feeding oxygen to the combustion boiler.

In one embodiment of the invention, the apparatus comprises at least one blower, which may be any blower known per se, e.g. a combustion gas or circulating gas blower, ejector or the like, for feeding the non-condensible gases and/or combustion gases to the combustion boiler and/or for feeding the carrier gas to the pyrolysis reactor.

In one embodiment of the invention, the apparatus comprises means for recovering, processing further, circulating in the apparatus and/or utilizing the fractions produced in different parts of the apparatus, such as the product, side and residual fractions. In one embodiment, the apparatus comprises at least one pipe fitting for conducting the selected fraction to the pyrolysis reactor, combustion boiler and/or storage reservoir.

In one embodiment of the invention, the apparatus comprises means for circulating at least one side, residual and/or waste flow to the combustion boiler. In one embodiment, the non-condensible gases from the condensing device, other fractions than the gaseous product fractions from the separating device, the combustion gas fraction, the refuse flow from the raw material feeding to the pyrolysis reactor and the solids from the condensing device can be conducted to the combustion boiler. Preferably, different side, residual and refuse fractions are conducted through the combustion boiler.

In one embodiment of the invention, the apparatus comprises means for transferring the energy-containing product fractions from the combustion boiler to a desired part of the apparatus, e.g. the pyrolysis reactor, dryer, temperature raising and/or recovery. Some of the heat energy that has been recovered during combustion can be utilized in the pyrolysis reactor e.g. by means of the heat transfer material that is heated in the combustion boiler. From the combustion boiler, the heated and at the same time purified heat transfer material is transferred, e.g. at a temperature of 700 to 900°C, to the pyrolysis reactor, so that part of the heat energy formed during combustion is transferred to the pyrolysis. The heat energy that is produced during combustion can alternatively be recovered e.g. as steam, electricity or hot water.

In one embodiment of the invention, the apparatus comprises a heat transfer material as the carrier material for transferring the energy-containing product fractions from the combustion boiler to a desired part of the apparatus, e.g. the pyrolysis reactor or dryer. In one embodiment, the heat transfer material is in the form of a solid, gas, vapor or liquid. In one preferred embodiment, the heat transfer material is selected from the group comprising sand, bed sand, aluminum oxide based material, other fluidization material and the like.

In one embodiment of the invention, the apparatus comprises means for separating the heat transfer material in a separating device and conducting it to the combustion boiler to be purified and heated. In one preferred embodiment, other fractions than the gaseous ones which have been separated in the separating device contain the heat transfer material. The solids-containing flow from the separating device to the combustion boiler may be controlled by means known per se, e.g. valves. In one embodiment of the invention, the apparatus comprises means for circulating the heat transfer material from the combustion boiler to the pyrolysis reactor. In one preferred embodiment, circulation of the heat transfer material from the combustion boiler to the pyrolysis reactor and from the pyrolysis reactor back to the combustion boiler through the separating device has been arranged so that it is integrated in conjunction with the apparatus.

In a preferred embodiment, the same heat transfer material, preferably bed sand, is circulated in the apparatus, at least in the combustion boiler and pyrolysis reactor. Preferably, bed sand operates at the same time as heat transfer material. In this case, the apparatus comprises means for arranging a shared bed sand circulation. In one embodiment, the apparatus comprises means for conducting the bed sand fraction, i.e. part of the solids-containing flow that has been separated from the separating device, to the pyrolysis reactor after the separating device, e.g. to the heat transfer material or raw material feed of the reactor or to the feeding device.

The heat transfer material may be fed from the combustion boiler to the pyrolysis reactor through a suitable valve solution known per se, e.g. a mechanic, non-mechanic, pressure stop valve, auger valve or L-valve.

In one embodiment, a heat exchanger is arranged between the combustion boiler and the pyrolysis reactor for cooling or heating the heat transfer material to be conducted from the combustion boiler to the pyrolysis reactor.

In one embodiment of the invention, the apparatus comprises means for monitoring and adjusting the temperature of the pyrolysis reactor. Preferably, the temperature of the pyrolysis reactor and the suspension density in the reactor are adjusted by means of the feeding rate of the heat transfer material to be fed, e.g. the amount entering through the feeding valve, and by means of the temperature of the heat transfer material, such as the adjustments of the heat exchanger and the combustion boiler. For example, if the temperature in the pyrolysis reactor rises, the heat transfer material is cooled or cold heat transfer material is fed at least partly to the pyrolysis reactor e.g. from a separate container or from the flow after the separating device. At the same time, the coke content in the apparatus can be adjusted.

In one embodiment of the invention, the apparatus comprises means for arranging the raw material of the pyrolysis reactor and the carrier gas into a mixture, preferably a warm mixture. In one preferred embodiment, hot particles of the heat transfer material from the combustion boiler are conducted to the mixture of raw materials and the carrier gas in the pyrolysis reactor. Consequently, an area of heavy turbulence is formed at the mixing point, i.e. a so-called flash effect occurs, whereby the pyrolysis can be initiated rapidly and efficiently. For example, the sand that is used as the heat transfer material is substantially heavier than the hydrocarbon particles in the raw material of the pyrolysis and, therefore, acceleration of the sand particles induces more efficient heat transfer and mixing of the gases in the mixture flow, resulting in an enhanced pyrolysis.

In one embodiment, the apparatus comprises a dryer in which the fuel to be pyrolyzed is dried thermically, preferably before the pyrolysis. Preferably, the drier is integrated with the pyrolysis reactor and/or the combustion boiler, and some of the heat energy that has been formed in the combustion boiler is utilized when drying the fuel to be pyrolyzed. The fuel may be dried e.g. by the hot combustion gases or the hot heat transfer material by utilizing the heat energy of the combustion boiler. Of course, the drying may also be performed in other manners. Any dryer known per se, e.g. a low temperature dryer, such as a storage dryer, or the like, can be used as the dryer.

In one embodiment of the invention, the combustion boiler and the pyrolysis reactor are integrated together in such manner that a separating wall is arranged between them.

Any solid fuel, e.g. forest chips, bark, peat or coal, or a multi-fuel mixture etc. which is burned in order to produce heat energy can be fed to the combustion boiler which is primarily designed for producing heat energy, such as electricity and steam. In one embodiment, the combustion boiler is provided with heat recovery.

In one preferred embodiment, the apparatus comprises means for adjusting the feeding to the combustion boiler. Preferably, the capacity of the combustion boiler is adjusted using the adjustment system of the boiler itself on the basis of the fuel feed to the combustion boiler. The different heat powers of the flows and fractions circulated from the pyrolysis apparatus correspond in magnitude to the power given off by the bed sand in the pyrolysis process. Therefore, there are no interferences in the combustion boiler caused by additional flows that should be fed thereto.

The fuel to be pyrolysed and fed to the pyrolysis reactor is preferably a wood-containing material, biomass and/or equivalent volatile materials containing organic material, e.g. sawdust, straw or waste plastic etc., which is pyrolyzed to pyrolysis steam in the pyrolysis reactor.

In one embodiment, substantially different raw materials or mixtures of raw materials are fed to the combustion boiler and the pyrolysis reactor. In one embodiment, at least partly the same raw materials or mixtures of raw materials are fed to the combustion boiler and the pyrolysis reactor.

The most important raw materials for the pyrolysis include residuals from the forest industry, such as chips, saw dust and bark chips. However, a high liquid yield is only obtained for dry raw material from a so-called heartwood without bark. In other words, a lesser amount of the pyrolysis product is produced from the bark which is furthermore more unstable and easily phase-separated. Therefore, it is not advisable to feed the same raw material to the pyrolysis reactor and the combustion boiler. A particularly preferred embodiment is to conduct bark-containing raw material to the combustion boiler to produce energy and saw dust to the pyrolysis reactor to produce a pyrolysis liquid. In addition, e.g. peat or coal is preferably conducted to the combustion boiler to satisfy the entire fuel need.

In one embodiment, the pyrolysis reactor is a fluidized-bed reactor, bubbling fluidization reactor or the like to which the fluidization material or the heat transfer material that has been purified and heated in the combustion boiler and that operates as the fluidization material can be conducted with the fuel to be pyrolyzed and with the carrier gas.

In one embodiment, the combustion boiler is a fluidized-bed boiler in which fuel and e.g. coke and non-condensible gases are burned and the heat transfer material is heated and purified. The fluidized-bed boiler may be e.g. a bubbling boiler or circulating mass boiler or a variation thereof or other boiler known per se.

The pyrolysis product can be produced by the apparatus according to the invention with higher efficiency than what is known, because the side and waste flows which are being produced can be converted in the combustion boiler to heat or steam for energy production. In the apparatus according to the invention, large quantities of heat energy are being produced as the utilizable product in addition to the pyrolysis product. Part of the heat energy of the combustion boiler is used in the pyrolysis reactor, optionally for drying the fuel to be pyrolyzed, and for combustion of the non-condensible gases in the combustion boiler, and most of the heat energy is conducted to be recovered e.g. in the form of steam. No additional fuel feed is needed for the pyrolysis reactor and the optional dryer, the heat energy that is conducted from the combustion boiler being sufficient for maintaining the process. On the other hand, the energy content of the solid and carbon matter, the non-condensible gases and other side flows can be utilized in the method according to the invention by burning them together with the other fuels in the combustion boiler. Burning the above-mentioned waste flows in the combustion boiler does not have any negative effect on the operation of the combustion boiler and the product efficiency. The water and the non-condensible gases to be fed to the boiler do not pose problems either in terms of maintaining the normal temperature of the boiler. Consequently, the waste flow feed to the combustion boiler does not have to be adjusted separately.

The invention provides the advantage that the solids and non-condensible gases are not recirculated to the pyrolysis reactor but are instead processed in the combustion boiler. A further advantage is the circulation of the waste and side flows and in particular combustible matter to the combustion boiler. After the combustion boiler, the process is free of any combustible or contaminated material flows, which increases the safety and environmental friendliness of the process. In the apparatus according to the invention, mostly all residual flows are conducted through the combustion boiler, so the purification efficiency is good. Further, the carrier gas is not recirculated to the pyrolysis but instead to the combustion boiler. Therefore, there will not be any problems relating to the contamination of the carrier gas. Consequently, the coke content in the pyrolysis reactor is low, due to the fact that the different flows are not directly recirculated to the pyrolysis reactor as in the solutions known from the prior art.

With the apparatus according to the invention, a multistep separating technique can be applied so that good separating efficiency for the unwanted fractions is achieved and wearing of the apparatus can be reduced.

Thanks to the circulation system through the combustion boiler according to the invention, the parts of the apparatus, such as the filters, will not become clogged up. By the invention, it is therefore possible to use a lower process pressure which facilitates the feeding of raw materials and the heat transfer material.

Furthermore, the solution according to the invention permits controlled shutdown of the reactor. During the shutdown, feeding of the fuel and the heat transfer material to the pyrolysis reactor can be cut off first. In this manner, no interference is provided for the operation of the combustion boiler.

### LIST OF FIGURES

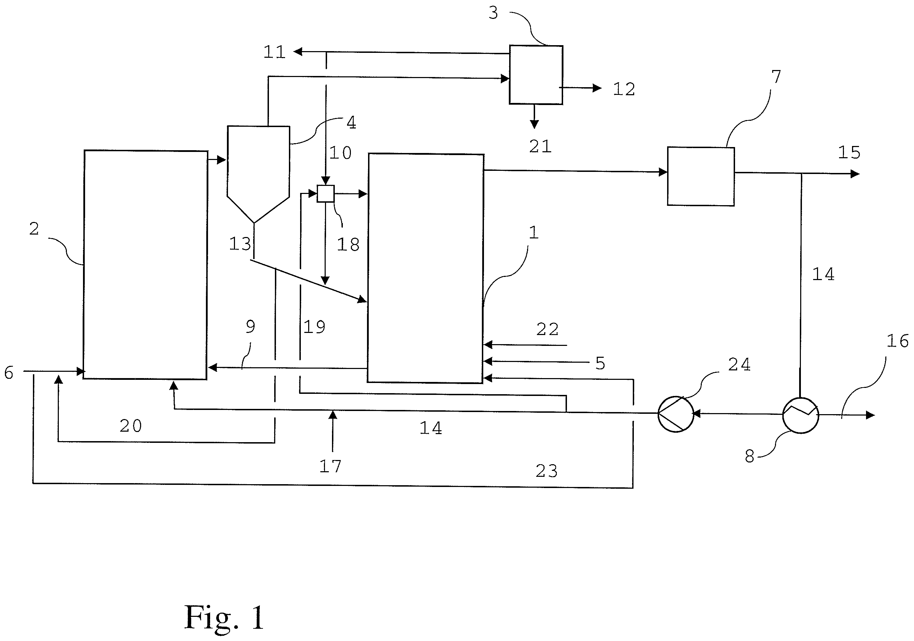

In the following section, the invention will be described with the aid of detailed exemplary embodiments, referring to the accompanying figure wherein
Fig. 1 presents one embodiment of the apparatus according to the invention.

### DETAILED DESCRIPTION OF THE INVENTION

Fig. 1 presents the apparatus according to the invention for producing pyrolysis products, the apparatus comprising a combustion boiler, i.e. a fluidization boiler, 1 for producing heat energy, a fast pyrolysis reactor, i.e. a pyrolyzer, 2 for forming pyrolysis steam, a condensing device 3 for condensing the pyrolysis steam, and separate fuel feeding devices 5 and 6 for feeding raw material to the combustion boiler and the pyrolyzer. In addition, the apparatus comprises a cyclone 4 for separating the solids and the heat transfer material from the pyrolysis steam after the pyrolyzer 2. The fluidization boiler, pyrolyzer, condensing device and cyclone are integrated together in the manner presented in the figure. The pyrolyzer is integrated to be in conjunction with the fluidization boiler.

Most of the fuel, e.g. carbon, peat, lignite or oil shale, is fed by the feeding device 5 to the fluidization boiler 1. Furthermore, the feeding device 5 is arranged to feed smaller amounts of forest chips or bark to the combustion boiler. Also air 22 is fed to the fluidization boiler 1. The feeding device 6 is arranged to feed e.g. wood-containing material, biomass, such as peat, saw dust or straw, or organic material to the pyrolyzer 2.

In the pyrolyzer 2, pyrolysis steam is formed from the fuel to be pyrolyzed by fast pyrolysis at a temperature of 300 to 800°C. In this device embodiment, the pyrolyzer is a circulating mass fluidization reactor. Heat energy from the fluidization boiler 1 is conducted to the pyrolyzer 2 in the form of hot bed sand through the internal material circulation cyclone, sand transfer pipe 9 and L-valve. In this embodiment, grain size of the bed sand is substantially over 0.5mm. A heat exchanger may be fitted to the bed sand transfer pipe 9 in order to adjust the temperature of the sand before the pyrolyzer 2. The sand and the carbon residue are recirculated to the fluidization boiler 1 from the separating device 4.

Solids and carbon matter, such as sand and coke or tar, are separated from the produced pyrolysis steam in the cyclone 4. The separated solids and carbon matter 13 are conducted to the combustion boiler 1 to be burned. Part of the solids, fraction 20, can be conducted to the pyrolyzer 2 through line 9 or alternatively from the pyrolyzer feed. In the combustion boiler 1, the bed sand is regenerated and heated and other material flows are burned. The heated sand is recirculated to the pyrolyzer 2.

From the cyclone 4, the pyrolysis steam is conducted to the condensing device 3, where the hot pyrolysis steam is condensed and fractionated in stages to a pyrolysis product liquid 12. Non-condensible gases, chemical compounds and/or aqueous solution thereof are conducted to the fluidization boiler 1 through a circulation pipe 10 to be burned or to an external recovery through a pipe 11. The non-condensible gas fractions, chemical compounds and/or aqueous solution thereof are conducted from the condensing device 3 to the pipe fitting between the cyclone 4 and the combustion boiler 1 where they are mixed with the solids-based fraction 13, or they are alternatively conducted directly to the combustion boiler from an ejector 18. The ejector 18 is arranged to the circulation pipe 10 for blowing the non-condensible gases and/or the combustion gas fraction 19, circulated from the combustion boiler, to the combustion boiler, if desired. The non-condensible gas fractions, chemical compounds and/or aqueous solution thereof are burned in the fluidization boiler with the other fuels.

In addition, the apparatus may comprise a filter for separating finer solids 21 from the pyrolysis steam.

The combined amount of the solid and carbon matter 13 conducted from the cyclone 4 and the non-condensible gases 10 is substantially less than 50% of the total amount of the raw material fed to the combustion boiler.

From the combustion boiler 1, the combustion gas can be conducted to an electric filter 7. Substantially, the pure combustion gas is circulated after the electric filter to the pyrolyzer 2 to serve as the carrier gas, to the ejector 18 or it is conducted out from the apparatus 15. The pure combustion gas 14 is conducted to the heat exchanger 8 where it is heated and water 16 is removed from the gas. From the heat exchanger, the carrier gas 14 which contains about 2 to 6% by volume of oxygen is conducted to the pyrolyzer 2 or the ejector 18 by means of a blower 24. The blower operates in a substantially tar-free atmosphere. The temperature of the combustion gas is at this stage about 120°C. Air 17 can be added to the carrier gas 14 for increasing the oxygen content if desired. The pressure production is utilized in the process. The pressure of the carrier gas and thereby the pressure of the pyrolysis reactor can be adjusted by the blower 24 and the ejector 18. The pressure level in the pyrolysis reactor is preferably so adjusted that at the feed of the pyrolysis reactor, the pressure is close to air pressure in order to avoid feeding problems.

Raw material for the pyrolyzer 2 is mixed with the carrier gas 14. Hot sand from the combustion boiler 1 is conducted to this mixture. This results in a so-called flash effect and the pyrolysis is initiated efficiently.

The fluidization boiler 1 further comprises a heat recovery device, e.g. a steam recovery/utilization device, a heat exchanger or an internal material circulation cyclone, for recovering the heat energy that has been formed or the heat transfer agent that has been warmed.

The apparatus may comprise a dryer for drying the raw material to be pyrolyzed. The dryer may be integrated to be in conjunction with the apparatus or it may be a separate device. Either the combustion gas of the combustion boiler or the sand conducted from the combustion boiler may be utilized as the heat delivering agent in the dryer. The non-condensible gases, evaporated water and optional volatilized chemical compounds and odorous gases are preferably circulated from the dryer to the fluidization boiler to be burned. Any dryer known per se, e.g. a mixing dryer, may be used as the dryer so it is not described in any more detail in this context.

Also, the apparatus may comprise at least one recovery unit for recovering the chemical compounds separated from different parts of the apparatus for possible subsequent utilization. The chemical compounds are utilized by means of processes known per se which are not described in any more detail in this context. The residual and waste flows of the recovery unit may be conducted to the combustion boiler.

By the apparatus according to the invention, the most valuable and suitable part of the raw material can be used as the material to be pyrolyzed, and the less suitable part in terms of the pyrolysis may be fed to the combustion boiler. The raw material may be fractionated by processes known per se. For example, the feeding materials to the pyrolyzer 2 may be classified by a classifier known per se, by an optical separator or in an equivalent manner before the pyrolyzer, and the so-called refuse fraction 23 can be conducted to the combustion boiler 1.

The apparatus according to the invention is suitable in different embodiments for producing different kinds of pyrolysis products and for producing energy fractions, such as heat energy.

The invention is not limited merely to the examples referred to above; instead many variations are possible within the scope of the inventive idea defined by the claims.

## Claims

1. An apparatus for producing a pyrolysis product, the apparatus comprising
- a pyrolysis reactor (2) for forming pyrolysis product fractions from raw material by fast pyrolysis,
- a separating device (4) for separating a fraction from pyrolysis product fractions after the pyrolysis,
- a condensing device (3) for condensing gaseous pyrolysis product fractions to mainly liquid pyrolysis product fractions,
- a combustion boiler (1) for forming energy product fractions and combustion gas, the pyrolysis reactor being arranged in conjunction with the combustion boiler,
- heat transfer material that is heated in the combustion boiler and used for transferring the energy product fractions,
- means (9) for circulating the heat transfer material from the combustion boiler (1) to the pyrolysis reactor (2),
- feeding devices (5, 6, 22) for feeding raw materials to the pyrolysis reactor and the combustion boiler,
- means for feeding carrier gas (14) to the pyrolysis reactor (2), and
- means for circulating residual flow to the combustion boiler,
wherein
- the separating device (4) is arranged substantially in conjunction with the pyrolysis reactor (2) for separating other fractions than gaseous pyrolysis product fractions from the gaseous pyrolysis product fractions after the pyrolysis, the other fractions than gaseous pyrolysis product fractions comprising also the heat transfer material; and
- the apparatus comprises means (13) for conducting the other fractions than the gaseous pyrolysis product fractions from the separator (4) to the combustion boiler (1); and
- the apparatus comprises means for circulating side flow, residual flow and/or waste flow to the combustion boiler, the flows being selected from the following: non-condensible gases (10) from the condensing device, the combustion gas fraction (19), the refuse flow (23) from the feed of the pyrolysis reactor and solids (21) from the condensing device; and
- the apparatus comprises means for arranging the raw material (6) of the pyrolysis reactor and the carrier gas (14) to a mixture and means for conducting the heated heat transfer material (9) to the mixture of the raw material of the pyrolysis reactor and the carrier gas; and
- the apparatus comprises means for forming the carrier gas (14) from the combustion gas of the combustion boiler and circulating it to the pyrolysis reactor (2).

2. The apparatus according to claim 1, **characterized in that** the apparatus comprises means for recovering, processing further, circulating in the apparatus and/or utilizing the fractions produced in different parts of the apparatus.

3. The apparatus according to claim 1 or 2, **characterized in that** the apparatus comprises means (10, 18) for conducting the non-condensible gas fractions from the condensing device (3) to the combustion boiler (1).

4. The apparatus according to any one of claims 1 to 3, **characterized in that** the apparatus comprises a blower (18) for feeding the non-condensible gases (10) and/or the combustion gas fraction (19) to the combustion boiler (1).

5. The apparatus according to any one of claims 1 to 4, **characterized in that** the apparatus comprises means for feeding a subfraction (20) of the solids containing flow (13) from the separating device (4) to the pyrolysis reactor (2).

6. The apparatus according to any one of claims 1 to 5, **characterized in that** the apparatus comprises means for adjusting the temperature of the pyrolysis reactor (2).

7. The apparatus according to any one of claims 1 to 6, **characterized in that** the apparatus comprises the heat transfer material for transferring the energy product fraction from the combustion boiler (1) to the desired part of the apparatus and/or to recovery.

8. The apparatus according to any one of claims 1 to 7, **characterized in that** the apparatus comprises a heat exchanger for adjusting the temperature of the heat transfer material before the pyrolysis reactor.

9. The apparatus according to any one of claims 1 to 8, **characterized in that** the apparatus comprises means for feeding oxygen (17) for the pyrolysis.

10. The apparatus according to any one claims 1 to 9, **characterized in that** the combustion boiler and the pyrolysis reactor are integrated together in such manner that a separating wall has been arranged between them.

11. Use of the apparatus according to any one of claims 1 to 10 for producing a pyrolysis product, wherein the heat transfer material is selected from the group comprising sand, bed sand or aluminum oxide based material.

12. Use of the apparatus according to any one claims 1 to 10 for producing a pyrolysis product, wherein the feeding device (5, 6, 22) feeds raw materials selected from the group comprising a wood-containg material, residuals from the forest industry and/or biomass to the pyrolysis reactor (2).

13. Use of the apparatus according to any one claims 1 to 10 for producing a pyrolysis product, wherein the feeding device (5, 6, 22) feeds raw materials selected from the group comprising a forest chips, bark, bark-containing material, peat, coal, lignite, oil shale and a multi-fuel mixture to the combustion boiler (1).

## Patentansprüche

1. Eine Vorrichtung zur Herstellung eines Pyrolyseproduktes, die Vorrichtung umfassend:
- einen Pyrolysereaktor (2) zur Bildung von PyrolyseProduktfraktionen aus Rohmaterial durch schnelle Pyrolyse,
- eine Trennvorrichtung (4) zum Abtrennen einer Fraktion aus Pyrolyseproduktfraktionen nach der Pyrolyse,
- eine Kondensationsvorrichtung (3) zum Kondensieren von gasförmigen Pyrolyseproduktfraktionen zu hauptsächlich flüssigen Pyrolyseproduktfraktionen,
- einen Verbrennungskessel (1) zur Bildung von Energieproduktfraktionen und Verbrennungsgas, wobei der Pyrolysereaktor in Verbindung mit dem Verbrennungskessel angeordnet ist,
- Wärmeübertragungsmaterial, das im Verbrennungskessel erhitzt und für die Übertragung der Energieproduktfraktionen verwendet wird,
- Mittel (9) zur Umwälzung des Wärmeübertragungsmaterials vom Verbrennungskessel (1) zum Pyrolysereaktor (2),
- Zuführeinrichtungen (5, 6, 22) zur Zuführung von Rohstoffen in den Pyrolysereaktor und den Verbrennungskessel,
- Mittel zur Zuführung von Trägergas (14) zum Pyrolysereaktor (2) und
- Mittel zur Umwälzung von Restströmung in den Verbrennungskessel, wobei
- die Trennvorrichtung (4) im Wesentlichen in Verbindung mit dem Pyrolysereaktor (2) angeordnet ist zur Trennung anderer Fraktionen als gasförmige Pyrolyseproduktfraktionen aus den gasförmigen Pyrolyseproduktfraktionen nach der Pyrolyse, wobei die anderen Fraktionen als die gasförmigen Pyrolyseproduktfraktionen auch das Wärmeübertragungsmaterial umfassen; und
- die Vorrichtung Mittel (13) zum Leiten der anderen Fraktionen als der gasförmigen Pyrolyseproduktfraktionen vom Trennvorrichtung (4) zum Verbrennungskessel (1) umfasst; und
- die Vorrichtung Mittel für den seitlichen Zirkulationsdurchfluss, Reststrom und/oder Abfallstrom zum Verbrennungskessel umfasst, wobei die Durchflüsse ausgewählt sind aus: nicht-kondensierbaren Gasen (10) aus der Kondensationsvorrichtung, der Verbrennungsgasfraktion (19), dem Abfallstrom (23) aus der Zuführung des Pyrolysereaktors und Feststoffen (21) aus der Kondensationsvorrichtung; und
- die Vorrichtung Mittel zum Anordnen des Rohmaterials (6) des Pyrolysereaktors und des Trägergases (14) zu einem Gemisch und Mittel für das Leiten des erwärmten Wärmeübertragungsmaterials (9) zur Mischung des Rohmaterials des Pyrolysereaktors und des Trägergases umfasst; und
- die Vorrichtung Mittel zur Bildung des Trägergases (14) aus dem Verbrennungsgas des Verbrennungskessels und deren Umwälzung in den Pyrolysereaktor (2) umfasst.

2. Die Vorrichtung nach Anspruch 1, **dadurch gekennzeichnet, dass** die Vorrichtung Mittel zur Rückgewinnung, Weiterverarbeitung, Umwälzung in der Vorrichtung und/oder Verwendung der in verschiedenen Teilen der Vorrichtung erzeugten Fraktionen umfasst.

3. Die Vorrichtung nach Anspruch 1 oder 2, **dadurch gekennzeichnet, dass** die Vorrichtung Mittel (10, 18) zum Leiten der nicht-kondensierbaren Gasfraktionen von der Kondensationsvorrichtung (3) zum Verbrennungskessel (1) umfasst.

4. Die Vorrichtung nach einem der Ansprüche 1 bis 3, **dadurch gekennzeichnet, dass** die Vorrichtung ein Gebläse (18) zur Speisung der nicht-kondensierbaren Gase (10) und/oder der Verbrennungsgasfraktion (19) zum Verbrennungskessel (1) umfasst.

5. Die Vorrichtung nach einem der Ansprüche 1 bis 4, **dadurch gekennzeichnet, dass** die Vorrichtung Mittel zur Zuführung einer Teilfraktion (20) des Feststoffstromes (13) aus der Trennvorrichtung (4) in den Pyrolysereaktor (2) umfasst.

6. Die Vorrichtung nach einem der Ansprüche 1 bis 5, **dadurch gekennzeichnet, dass** die Vorrichtung Mittel zum Einstellen der Temperatur des Pyrolysereaktors (2) umfasst.

7. Die Vorrichtung nach einem der Ansprüche 1 bis 6, **dadurch gekennzeichnet, dass** die Vorrichtung das Wärmeübertragungsmaterial für den Transport von der Energieproduktfraktion aus dem Verbrennungskessel (1) zum gewünschten Teil der Vorrichtung und/oder zur Rückgewinnung umfasst.

8. Die Vorrichtung nach einem der Ansprüche 1 bis 7, **dadurch gekennzeichnet, dass** die Vorrichtung einen Wärmeaustauscher für das Einstellen der Temperatur des Wärmeübertragungsmaterials vor dem Pyrolysereaktor umfasst.

9. Die Vorrichtung nach einem der Ansprüche 1 bis 8, **dadurch gekennzeichnet, dass** die Vorrichtung Mittel zur Sauerstoffzufuhr (17) umfasst.

10. Die Vorrichtung nach einem der Ansprüche 1 bis 9, **dadurch gekennzeichnet, dass** der Verbrennungskessel und der Pyrolysereaktor so miteinander integriert sind, sodass zwischen ihnen eine Trennwand angeordnet ist.

11. Verwendung der Vorrichtung nach einem der Ansprüche 1 bis 10 zur Herstellung eines Pyrolyseprodukts, wobei das Wärmeübertragungsmaterial aus der Gruppe ausgewählt wird umfassend Sand, Bettsand oder Material auf Aluminiumoxidbasis.

12. Verwendung der Vorrichtung nach einem der Ansprüche 1 bis 10 zur Herstellung eines Pyrolyseprodukts, wobei die Zuführeinrichtung (5, 6, 22) Rohmaterialien zum Pyrolysereaktor (2) zuführt, die ausgewählt werden aus der Gruppe umfassend einen holzhaltigen Stoff, Reststoffe aus der Forstwirtschaft und/oder Biomasse.

13. Verwendung der Vorrichtung nach einem der Ansprüche 1 bis 10 zur Herstellung eines Pyrolyseproduktes, wobei die Zuführeinrichtung (5, 6, 22) Rohmaterialien zum Verbrennungskessel (1) zuführt, die ausgewählt werden aus der Gruppe umfassend Waldhackgut, Rinde, rindenhaltigem Material, Torf, Kohle, Braunkohle, Ölschiefer und Mehrstoffgemisch.

## Revendications

1. Appareil de production d'un produit de pyrolyse, l'appareil comprenant :
- un réacteur de pyrolyse (2) pour former des fractions de produits de pyrolyse à partir d'une matière première par pyrolyse rapide,
- un dispositif de séparation (4) pour séparer une fraction des fractions de produits de pyrolyse après la pyrolyse,
- un dispositif de condensation (3) pour condenser des fractions de produits de pyrolyse gazeuses en principalement des fractions de produits de pyrolyse liquides,
- une chaudière de combustion (1) pour former des fractions de produits énergétiques et du gaz de combustion, le réacteur de pyrolyse étant agencé conjointement avec la chaudière de combustion,
- un matériau de transfert thermique qui est chauffé dans la chaudière de combustion et utilisé pour transférer les fractions de produits énergétiques,
- des moyens (9) pour faire circuler le matériau de transfert thermique de la chaudière de combustion (1) au réacteur de pyrolyse (2),
- des dispositifs d'alimentation (5, 6, 22) pour acheminer des matières premières au réacteur de pyrolyse et à la chaudière de combustion,
- des moyens pour acheminer un gaz véhiculaire (14) au réacteur de pyrolyse (2) et
- des moyens pour faire circuler un flux résiduel vers la chaudière de combustion,
dans lequel :
- le dispositif de séparation (4) est agencé sensiblement conjointement avec le réacteur de pyrolyse (2) pour séparer des fractions autres que des fractions de produits de pyrolyse gazeuses des fractions de produits de pyrolyse gazeuses après la pyrolyse, les fractions autres que les fractions de produits de pyrolyse gazeuses comprenant également le matériau de transfert thermique ; et
- l'appareil comprend des moyens (13) pour acheminer les fractions autres que les fractions de produits de pyrolyse gazeuses du séparateur (4) à la chaudière de combustion (1) ; et
- l'appareil comprend des moyens pour faire circuler un flux latéral, un flux résiduel et/ou un flux de déchets vers la chaudière de combustion, les flux étant choisis parmi les suivants : des gaz non condensables (10) issus du dispositif de condensation, la fraction de gaz de combustion (19), le flux de rebut (23) issu de l'alimentation du réacteur de pyrolyse et des solides (21) issus du dispositif de condensation ; et
- l'appareil comprend des moyens pour agencer la matière première (6) du réacteur de pyrolyse et le gaz véhiculaire (14) en un mélange et des moyens pour acheminer le matériau de transfert thermique chauffé (9) au mélange de la matière première du réacteur de pyrolyse et de gaz véhiculaire ; et
- l'appareil comprend des moyens pour former le gaz véhiculaire (14) à partir du gaz de combustion de la chaudière de combustion et le faire circuler vers le réacteur de pyrolyse (2) .

2. Appareil selon la revendication 1, **caractérisé en ce que** l'appareil comprend des moyens pour récupérer, traiter encore, faire circuler dans l'appareil et/ou utiliser les fractions produites dans différentes parties de l'appareil.

3. Appareil selon la revendication 1 ou 2, **caractérisé en ce que** l'appareil comprend des moyens (10, 18) pour acheminer les fractions de gaz non condensables du dispositif de condensation (3) à la chaudière de combustion (1).

4. Appareil selon l'une quelconque des revendications 1 à 3, **caractérisé en ce que** l'appareil comprend une soufflerie (18) pour acheminer les gaz non condensables (10) et/ou la fraction de gaz de combustion (19) à la chaudière de combustion (1).

5. Appareil selon l'une quelconque des revendications 1 à 4, **caractérisé en ce que** l'appareil comprend des moyens pour acheminer une sous-fraction (20) du flux (13) contenant des solides du dispositif de séparation (4) au réacteur de pyrolyse (2).

6. Appareil selon l'une quelconque des revendications 1 à 5, **caractérisé en ce que** l'appareil comprend des moyens pour ajuster la température du réacteur de pyrolyse (2).

7. Appareil selon l'une quelconque des revendications 1 à 6, **caractérisé en ce que** l'appareil comprend le matériau de transfert thermique pour transférer la fraction de produits énergétiques de la chaudière de combustion (1) à la partie souhaitée de l'appareil et/ou à la récupération.

8. Appareil selon l'une quelconque des revendications 1 à 7, **caractérisé en ce que** l'appareil comprend un échangeur de chaleur pour ajuster la température du matériau de transfert thermique avant le réacteur de pyrolyse.

9. Appareil selon l'une quelconque des revendications 1 à 8, **caractérisé en ce que** l'appareil comprend des moyens pour acheminer de l'oxygène (17) pour la pyrolyse.

10. Appareil selon l'une quelconque des revendications 1 à 9, **caractérisé en ce que** la chaudière de combustion et le réacteur de pyrolyse sont intégrés l'un à l'autre de manière telle qu'une paroi de séparation ait été agencée entre eux.

11. Utilisation de l'appareil selon l'une quelconque des revendications 1 à 10 pour produire un produit de pyrolyse, dans lequel le matériau de transfert thermique est choisi dans le groupe constitué de sable, de sable de lits ou d'un matériau à base d'oxyde d'aluminium.

12. Utilisation de l'appareil selon l'une quelconque des revendications 1 à 10 pour produire un produit de pyrolyse, dans lequel le dispositif d'alimentation (5, 6, 22) fournit des matières premières choisies dans le groupe constitué d'un matériau contenant du bois, des résidus de l'industrie forestière et/ou de la biomasse au réacteur de pyrolyse (2).

13. Utilisation de l'appareil selon l'une quelconque des revendications 1 à 10 pour produire un produit de pyrolyse, dans lequel le dispositif d'alimentation (5, 6, 22) fournit des matières premières choisies dans le groupe constitué de copeaux de forêt, d'écorce, d'un matériau contenant de l'écorce, de tourbe, de houille, de lignite, de schiste bitumineux et d'un mélange à combustibles multiples à la chaudière de combustion (1).
